# FASCICULE DE BREVET EUROPEEN

(11) **EP 2 553 549 B1**
(45) Date de publication et mention de la délivrance du brevet: **07.12.2022**
(21) Numéro de dépôt: 11730343.8
(22) Date de dépôt: 30.03.2011
(51) Int. Cl.: G06F 3/0354, G06F 3/041, G06F 3/044, B60R 11/02

(54) **INTERFACE HOMME-MACHINE A SURFACE SUPERIEURE LISSE**
MENSCH-MASCHINE-SCHNITTSTELLE MIT GLATTER OBERSEITE
MAN-MACHINE INTERFACE WITH SMOOTH UPPER SURFACE

(30) Priorité: 31.03.2010 FR 1001313
(43) Date de publication de la demande: 06.02.2013
(73) Titulaire: Valeo Systemes Thermiques, 78320 Le Mesnil Saint Denis (FR)
(72) Inventeur: AUTRAN, Frédéric, 75018 Paris (FR)
(74) Mandataire: Pothmann, Karsten
(86) Numéro de dépôt international: PCT/FR2011/000187
(87) Numéro de publication internationale: WO 2011/124783

(56) Documents cités:
- JP-B2- 4 367 514
- US-A1- 2006 144 934
- US-A1- 2008 094 372
- US-A1- 2008 246 741

## Description

La présente invention concerne une interface homme-machine munie d'un dispositif de visualisation disposé en regard d'un cadre. Une telle interface est couramment utilisée dans de nombreux secteurs d'activités mettant en jeu la commande tactile d'un équipement, par exemple dans le domaine de la domotique ou de la manipulation d'outils informatiques. L'invention vise plus particulièrement, quoique non exclusivement, l'utilisation d'une telle interface pour la commande des différents systèmes (navigation, audio ou multimédia, climatisation) d'un véhicule automobile, l'interface pouvant alors être intégrée à l'habitacle du véhicule et le dispositif de visualisation étant un dispositif d'interaction tactile.

Une interface homme-machine pour la commande tactile d'un équipement comprend généralement un dispositif d'interaction tactile comportant un capteur tactile au moins partiellement transparent muni de deux réseaux non-parallèles de pistes conductrices, espacées par des entretoises isolantes de manière que lorsqu'un utilisateur appuie sur le capteur, certaines pistes de ces deux réseaux entrent en contact, si bien que lorsqu'un signal électrique est émis depuis l'extrémité d'une piste de l'un des réseaux, ce signal peut être détecté par l'extrémité d'une piste de l'autre réseau et l'existence d'un contact à l'intersection de ces deux pistes est détecté. Ce capteur tactile est disposé au-dessus d'un afficheur sur lequel apparaissent la pluralité d'objets graphiques à manipuler, cette manipulation étant gérée par un circuit de commande électronique reliant le capteur tactile, l'afficheur et les différents équipements à commander au travers du dispositif d'interaction tactile.

Aux fins de son intégration dans un habitacle ou tout autre support, l'interface comprend un cadre, dont l'ouverture est destinée à la visualisation par un utilisateur. Pour cela, le dispositif d'interaction tactile, est disposé en regard du cadre, sans considération particulière quant à la position de la face supérieure du dispositif d'interaction par rapport à la face supérieure du cadre, cette dernière se trouvant généralement au-dessus.

Or, le fait que la face supérieure du cadre soit située au-dessus de celle du dispositif d'interaction présente l'inconvénient d'engendrer une discontinuité de surface au niveau de la partie supérieure de l'interface homme-machine, cette partie étant celle orientée vers l'utilisateur. Cette discontinuité confère à cette partie supérieure un aspect non-lisse et non-uniforme, ce qui nuit à l'esthétique générale de l'interface.

Pour surmonter cet inconvénient, le dispositif d'interaction tactile pourrait être ajusté de manière que sa face supérieure soit au même niveau que la face supérieure du cadre, le tout étant recouvert d'un film dont la fonction est de lisser et d'uniformiser la partie supérieure de l'interface.

Toutefois, là encore, on se heurte à des problèmes esthétiques ainsi qu'à des problèmes de perturbation de l'image perçue par l'utilisateur. En effet, au moment de la fabrication de l'interface, il peut être observé une tolérance de positionnement des deux faces précitées l'une par rapport à l'autre, si bien que celle du dispositif d'interaction peut être située au-dessous de celle du cadre. Cette discontinuité, même limitée par une faible tolérance de positionnement, entraîne l'apparition de zones d'air au niveau des bords du dispositif. Ces zones, délimitées sur le dessus par la couche de lissage, sur le dessous par le dispositif d'interaction et sur le côté par le cadre, peuvent être à l'origine d'effets inesthétiques sur les bords dudit dispositif car il s'agit d'une zone transparente, la zone d'air provoquant une réflexion inappropriée consécutive au changement d'indice des rayons lumineux, ce qui rend ainsi apparent ladite zone d'air. L'image visible par l'utilisateur est dégradée localement par des réflexions parasites ou un flou, ce qui se traduit dans tous les cas par une discontinuité

JP2008257494 concerne un dispositif de saisie qui comprend un panneau de saisie, un élément de couverture qui est muni d'une partie de logement, dans laquelle le panneau de saisie est logé, et un élément de film qui est disposé sur une surface principale du panneau de saisie prévu dans la partie de logement et une surface principale de l'élément de couverture.

L'invention a pour but de remédier à ces inconvénients et concerne une interface homme-machine munie d'un dispositif de visualisation, par exemple un écran ou un dispositif d'interaction tactile, disposé en regard d'un cadre, le dispositif d'interaction et le cadre étant agencés pour que la partie supérieure de cette interface présente un aspect esthétique lisse, uniforme et sans défauts visuels.

A cette fin, selon l'invention, l'interface homme-machine du type défini cidessus est remarquable par le fait que la face supérieure du dispositif de visualisation, avantageusement matérialisée par le dispositif d'interaction ou un écran, est disposée sensiblement au-dessus de la face supérieure du cadre et par le fait que ledit dispositif et ledit cadre sont recouverts d'un film de lissage, dans laquelle le dispositif de visualisation est recouvert d'une couche d'ajustement de la position de la face supérieure dudit dispositif par rapport à la face supérieure du cadre, en ce que le cadre est recouvert d'une couche de masquage, le film de lissage comprenant une couche de masquage et en ce que la couche de masquage recouvre également au moins une partie de la face supérieure du dispositif de visualisation.

Grâce à l'invention, on s'assure que la face supérieure du cadre soit disposée suffisamment au-dessous de celle du dispositif pour qu'elle le reste après intégration des différents éléments au sein de l'interface, c'est-à-dire en incluant les tolérances de positionnement de ces deux faces l'une par rapport à l'autre. De cette manière, les zones d'air précitées sont toujours présentes, mais elles sont cette fois-ci délimitées sur le dessus par la couche de lissage, sur le dessous par le cadre et sur le côté par le dispositif d'interaction. Ainsi, ces zones d'air ne se trouvent plus sur les bords du dispositif d'interaction tactile, là où elles confèrent un aspect inesthétique ou une gêne visuelle, mais sur les bords du cadre, dont l'aspect peut être rendu opaque et où elles peuvent donc être rendues invisibles.

Autrement dit, la présente invention ne propose pas d'annihiler ou encore de rétrécir les zones d'air considérées comme esthétiquement nuisibles, mais au contraire de déporter ces zones vers un endroit où elles n'engendrent plus d'effets inesthétiques ni de flou visible de l'utilisateur vis-à-vis du dispositif de visualisation, notamment d'interaction tactile.

Selon l'invention le dispositif de visualisation, notamment le dispositif d'interaction tactile, est recouvert d'une couche d'ajustement de la position de la face supérieure dudit dispositif par rapport à la face supérieure du cadre. Dès lors, on positionne selon l'invention la face supérieure de cette couche d'ajustement au-dessus de celle du cadre, la couche de lissage venant recouvrir à la fois le dispositif, le cadre et ladite couche d'ajustement.

Selon l'invention, le cadre est recouvert d'une couche de masquage ou le film de lissage comprend une couche de masquage, ce qui permet de masquer le bord du cadre sur lequel ont été déportées les zones d'air qui présentent un effet inesthétique ou flou, et ainsi de masquer complètement ces zones d'air.

Dans ce dernier cas, de manière avantageuse, la couche de masquage recouvre également au moins une partie de la face supérieure du dispositif de visualisation, notamment le dispositif d'interaction tactile, ce qui offre une marge de sureté pour garantir la couverture de la zone d'air que l'invention à translater au dessus du cadre.

Afin d'ajuster parfaitement la position des faces supérieures du dispositif et du cadre, il est avantageusement prévu que la distance entre la face supérieure du dispositif de visualisation, notamment le dispositif d'interaction tactile, et la face supérieure du cadre :
- n'excède pas l'épaisseur du film de lissage, afin de ne pas déformer excessivement ledit film de lissage, et/ou
- soit supérieure à la tolérance de positionnement desdites faces l'une par rapport à l'autre, afin de s'assurer du positionnement desdites faces conformément à l'invention en tenant compte du fait que celui-ci peut être perturbé par la tolérance correspondant au positionnement effectif du dispositif par rapport au cadre.

De préférence, le dispositif de visualisation, notamment le dispositif d'interaction tactile comprend un capteur tactile au moins partiellement transparent disposé au-dessus d'un afficheur.

Dans un mode de réalisation préféré de l'invention, le dispositif de visualisation est un dispositif d'interaction tactile.

Dans un mode de réalisation particulièrement avantageux, dans lequel le dispositif d'interaction présente au moins une partie en regard de la face inférieure du cadre, ladite partie est fixée à ladite face inférieure dudit cadre. Le cadre joue ainsi un rôle supplémentaire de support du dispositif d'interaction tactile, ledit dispositif se trouvant suspendue audit cadre, ce qui rend impossible tout déplacement du dispositif par rapport au cadre et permet ainsi de maintenir un jeu constant entre eux en toutes circonstances, bien qu'ils présentent pourtant des coefficients de dilatation tout à fait différents (en général, le dispositif est principalement constitué en verre, le cadre en plastique).

Dans un mode de réalisation particulier, dans lequel le dispositif d'interaction est intégré dans un boîtier, ce boîtier comporte dans sa partie supérieure un épaulement pour le support du cadre.

D'autres caractéristiques et avantages de l'invention apparaîtront lors de la description qui suit faite en regard des dessins annexés, donné à titre d'exemple non limitatif, dans lequel :
- la figure 1 est une vue schématique en coupe d'une interface homme-machine selon un mode de réalisation de l'invention ;
- la figure 2 est une vue schématique en coupe des bords du cadre et du dispositif d'interaction tactile intégrés à l'interface de la figure 1 ;
- la figure 3 est une vue schématique de dessus de l'interface de la figure 1 ;
- la figure 4 est une vue schématique en coupe des bords du cadre et du dispositif d'interaction tactile intégrés à une interface homme-machine selon l'antérieur, à titre comparatif ; et
- la figure 5 est une vue schématique de dessus de l'interface de la figure 4.

Ces figures annexées feront bien comprendre comment l'invention peut être réalisée et pourront à servir à mieux définir l'invention, le cas échéant.

Pour une meilleure lisibilité, des références identiques sur ces figures désignent des éléments semblables.

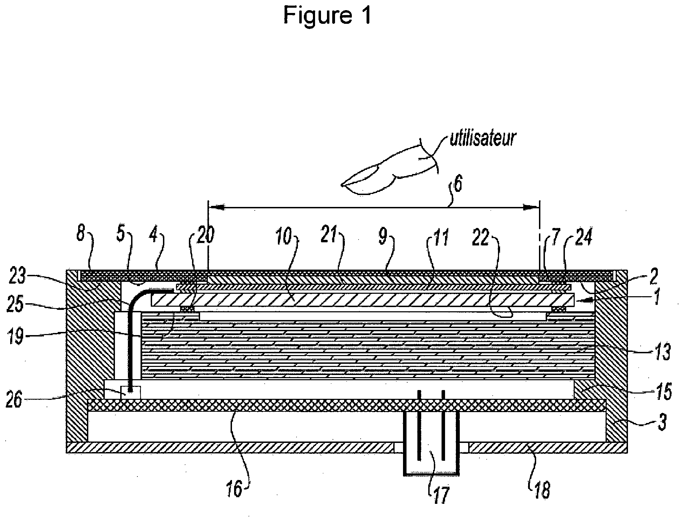

L'interface homme-machine de la figure 1 comporte un boîtier 3 présentant un évidement interne à l'intérieur duquel sont installés les éléments constitutifs de l'interface, en particulier un dispositif de visualisation, notamment un dispositif d'interaction tactile, d'interaction tactile qui intègre un capteur tactile 1, un afficheur 13 et un circuit électronique de commande 16.

La description qui suit fait référence à un dispositif d'interaction tactile comme exemple non limitatif du dispositif de visualisation, ce dernier pouvant aussi être un afficheur ou un écran.

L'afficheur 13 est installé dans le boîtier 3 en appui contre un épaulement 15 pratiqué dans l'évidement de ce dernier. La technologie employée pour cet afficheur est par exemple du type écran rétro-éclairé, écran LCD, écran plasma, ou d'une manière générale du type écran multifonctions, c'est-à-dire affichant une multiplicité d'informations telle que la navigation, la gestion audio et/ou la gestion thermique (de l'habitacle du véhicule par exemple).

De l'autre côté de l'épaulement 15 est installé un circuit imprimé ou carte électronique 16 sur laquelle est disposé un connecteur électrique 17 destiné à raccorder l'interface homme-machine au réseau du véhicule automobile. Un couvercle 18 vient fermer la partie arrière du boîtier 3, ledit couvercle 18 comportant un trou de passage du connecteur 17. On notera que ce couvercle est disposé sur la face arrière de l'interface homme-machine, c'est-à-dire donnant accès à la partie technique de l'interface. A l'opposé est disposée la partie supérieure, orientée vers l'utilisateur, c'est-à-dire celle qui fait face à l'utilisateur de l'interface.

L'afficheur 13 est coiffé par le capteur tactile 1. Une étanchéité à l'air et à l'eau est pratiquée entre l'afficheur 13 et le capteur tactile 1, plus particulièrement la face 19 de l'afficheur 13 est orientée vers l'utilisateur et la face arrière du capteur tactile 1. Cette étanchéité est réalisée au moyen d'un joint 20 disposé de manière périphérique sur la face 19.

Le capteur tactile 1 peut être de type résistif ou capacitif, l'invention trouvant une application toute particulière avec dans le cas d'un capteur résistif. Ce capteur est constitué d'une plaque principale 10 et d'une plaque secondaire 11. Ces deux plaques sont en verre, la plaque secondaire 11 étant plus fine que la plaque principale 10. La plaque secondaire 11 joue un rôle de surface de contact apte à se déformer sous l'effet d'une force d'appui exercée par le doigt de l'utilisateur, tandis que la plaque principale 10 est moins déformable et joue un rôle de support.

Le capteur est ainsi en mesure de détecter la position du doigt de l'utilisateur grâce à un réseau de conducteurs placé entre la plaque principale et la plaque secondaire, selon une disposition par exemple horizontale et verticale. Le capteur tactile 1 est relié électriquement à la carte électronique 16 au moyen d'un flexible multiconducteur 25, ce dernier étant raccordé à la carte électronique par un raccord électrique amovible 26. De cette manière, le capteur tactile 1 présente une face 21 sensible à tout contact, orientée vers l'utilisateur, et une face arrière 22, tournée vers l'afficheur 13.

Le capteur tactile 1 est fixé à un cadre 2, qui joue un rôle de support du dispositif d'interaction tactile, et qui prend la forme d'un élément plat et rigide, d'une épaisseur comprise entre 0,20 et 0,50 mm. Cet élément est une plaque métallique fine, par exemple en inox.

Le cadre 2 comporte deux grandes faces appelées face supérieure 4 et face inférieure 5. La face supérieure 4 est celle qui fait face à l'utilisateur et qui est accessible au toucher par ce dernier. La face inférieure 5 est une face sensiblement parallèle à la face sensitive 21 du capteur tactile 1, cette face inférieure 5 étant tournée vers ledit capteur tactile 1. D'une manière générale, la face supérieure 4 est celle qui fait face à l'habitacle du véhicule alors que la face inférieure 5 est celle qui fait face à l'intérieur de la planche de bord.

Le boîtier 3 comporte un épaulement 23 qui reçoit le cadre 2. Cet épaulement 23 délimite une cavité dont la longueur et la largeur sont sensiblement égales à la longueur et la largeur du cadre 2.

Le capteur tactile 1 est fixé sur la face inférieure 5 du cadre 2. Cette fixation peut être assurée par tout type de moyen apte à solidariser deux pièces entre elles. Avantageusement, un cordon ou des points de colle 24 assurent le lien mécanique entre la face sensitive 21 du capteur tactile et la face inférieure 5 du cadre. Alternativement, les points de colles 24 peuvent être remplacés ou complétés par une bande adhésive.

Le cadre 2 présente une ouverture 6 délimitée par un bord 7. Lorsque cette ouverture 6 est pratiquée dans la partie centrale du cadre 2, le bord 7 entoure l'ouverture 6 de manière périphérique. Ce bord 7 couvre l'arête périphérique du capteur tactile 1.

Dans ce mode de réalisation, l'espace créé par l'ouverture 6 au niveau du capteur tactile 1 est rempli par une couche d'ajustement 9 - ou encore de comblement - disposée de manière à définir conjointement avec le bord 7 et la face supérieure 4 du cadre 2 une surface plane et lisse. Cette couche d'ajustement 9 comprend un film transparent et souple fabriqué à partir d'une bande de polycarbonate ou en polyéthylène téréphtalate (PET).

Un film de lissage 8 est disposé sur la face supérieure 4 du cadre 2 de sorte à couvrir l'ouverture 6 et le bord 7. Puisque ce film s'étend sur toute la surface du cadre 2, on comprend que les dimensions du film 8 et les dimensions du cadre 2 sont sensiblement égales. Comme ce film couvre l'ouverture 6, il vient en appui sur la couche d'ajustement 9 formant ainsi une surface totalement lisse et uniforme au toucher pour l'utilisateur.

Dans ce mode de réalisation, la profondeur de l'épâulement 23 est au moins égale à la somme des épaisseurs du film 8 et du cadre 2 et avantageusement légèrement supérieure (profondeur = somme des épaisseurs du film 8 et du cadre 2 augmentée de 0,2mm) pour garantir que la tranche du film est protégée contre les risque d'arrachement.

Le film 8 est un film transparent qui peut présenter une seule propriété ou une combinaison de propriétés, parmi lesquelles :
- des propriétés décoratives, ce qui rend aisée la définition d'une forme particulière visible par l'utilisateur ;
- des propriétés anti-rayures, de sorte à éviter l'apparition de toutes griffures sur la surface de l'interface homme-machine ;
- des propriétés anti-reflets;
- des propriétés de diffusion afin de donner un aspect mat à l'interface homme-machine et d'éviter les effets miroirs gênants pour l'utilisateur ; et
- des propriétés polarisantes.

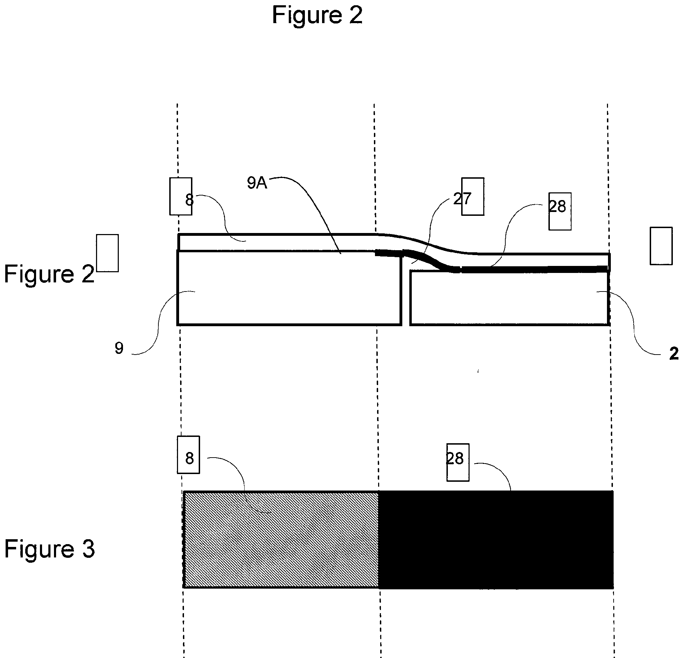

On décrit à présent la disposition, selon l'invention, de la face supérieure de la couche d'ajustement 9 (formant partie du dispositif d'interaction tactile) par rapport à la face supérieure du cadre 2, en référence aux figures 2 et 3.

Dans le cas présent, le dispositif d'interaction tactile est muni d'une couche d'ajustement 9 et suspendu (via le capteur tactile 1) au cadre 2, mais l'homme du métier saura adapter cette variante au cas où le dispositif est fixé d'une autre manière au boîtier et au cas où aucune couche d'ajustement n'est utilisée, c'est-à-dire dans le cas où la partie supérieure du dispositif est constituée du dispositif de visualisation ou du dispositif d'interaction tactile, c'est-à-dire le capteur tactile 1. Cette couche d'ajustement 9 est disposée de manière que, après intégration (incluant donc les tolérances de positionnement), sa face supérieure soit située au-dessus de celle du cadre 2. Par ailleurs, le bord du cadre 2 et la couche 9 ne sont pas collés l'un à l'autre, si bien que l'on observe un espace entre eux. L'ensemble est revêtu du film de lissage 8 de manière à lisser les discontinuités de la partie supérieure de l'interface et rendre ainsi ladite partie lisse et uniforme.

On observe alors sur la figure 2 une zone d'air 27, délimitée sur le dessus par le film de lissage 8, sur le côté par la couche d'ajustement 9 et sur le dessous par le cadre 2. Cette zone d'air 27 ne se trouve donc pas sur la couche d'ajustement 9 (qui surplombe le capteur tactile 1 et l'afficheur 13, et forme la partie supérieure du dispositif d'interaction tactile) mais sur le cadre 2, là où l'effet inesthétique ou les perturbations visuelles peuvent être facilement annihilées. Pour cela, il est recouru à un film ou une couche de masquage 28, par sérigraphie ou projection de peinture, disposé entre le cadre 2 et le film de lissage 8 de manière à masquer ledit cadre 2 (qui peut être transparent), ainsi qu'éventuellement le bord du film d'ajustement 9, et par conséquent l'ensemble des zones d'air 27.

Le rendu esthétique résultant de cet agencement particulier, illustré par la figure 3, présente une première zone transparente (à gauche) correspondant à la superposition de la couche d'ajustement 9 et du film de lissage 8, ainsi qu'une seconde zone opaque correspondant à la superposition de la couche de masquage 28 et du film de lissage 8. L'invention permet donc d'observer deux zones parfaitement distinctes, sans défauts ni discontinuités.

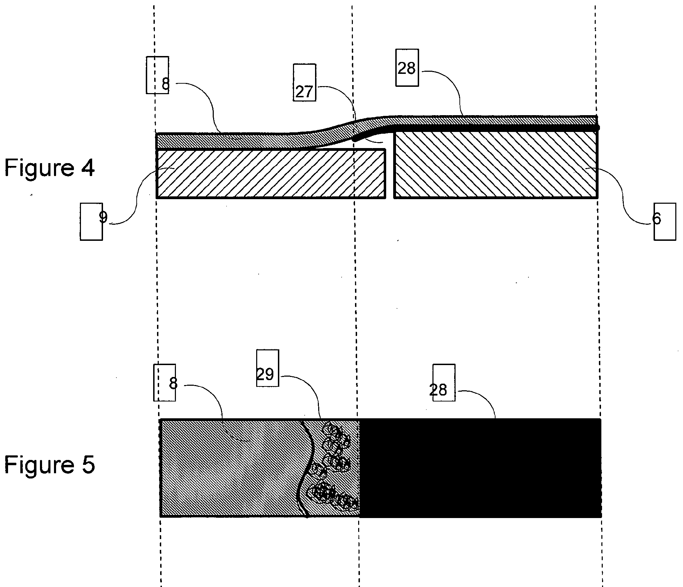

Cette solution est à comparer au cas inverse, représenté sur les figures 4 et 5, qui peut apparaître lorsqu'aucune attention n'est prêtée quant à la position relative de la face supérieure de la couche d'ajustement 9 et du cadre 2.

Dès lors, on observe sur la figure 4 une zone d'aire 27, délimitée sur le dessus par le film de lissage 8, sur le dessous par la couche d'ajustement 9 et sur le côté par le cadre 2. Cette zone d'air 27 se trouve donc sur la couche d'ajustement 9 (qui surplombe le capteur tactile 1 et l'afficheur 13), là où l'effet inesthétique ou les perturbations optiques peuvent être visibles, et elle s'étend d'autant plus sur la couche d'ajustement 9 que la distance entre les faces supérieures respectivement de la couche 9 et du cadre 2 est élevée.

On notera qu'une couche de masquage 28 peut être utilisé, celui-ci recouvrant non seulement le cadre 2 mais également les bords de la couche 9, mais cette solution ne saurait être satisfaisante dans le cas où au moins une partie de la zone d'air 27 s'étendrait de manière trop importante le long de la couche 9, étant entendu que la couche de masquage 28 ne peut masquer une surface trop importante du dispositif d'interaction tactile pour des raisons évidentes d'optimisation de la surface disponible.

Le rendu esthétique et le respect des performances optiques résultant de cet agencement qui peut être réalisé avec les interfaces homme-machine selon l'art antérieur, illustré par la figure 5, présente les deux mêmes zones que celles représentées sur la figure 3, mais également une zone intermédiaire inesthétique ou floue 29, correspondant à la superposition de la couche d'ajustement 9, de la couche d'air 27 et du film de lissage 8, cette zone 29 étant susceptible de s'étendre de manière aléatoire le long de la périphérie de la couche d'ajustement 9 (et donc du dispositif d'interaction tactile ou de l'écran), ce qui nuit significativement à l'esthétique générale et aux performances optiques de l'interface.

## Revendications

1. Interface homme-machine munie d'un dispositif de visualisation (1,9,13,16,25,26) disposé en regard d'un cadre (2), **caractérisée par le fait que** la face supérieure (9A) du dispositif de visualisation est disposée sensiblement au-dessus de la face supérieure (4) du cadre et **par le fait que** ledit dispositif et ledit cadre sont recouverts d'un film de lissage (8), dans laquelle le dispositif de visualisation (1,9,13,16,25,26) est recouvert d'une couche d'ajustement (9) de la position de la face supérieure (9A) dudit dispositif par rapport à la face supérieure (4) du cadre (2), en ce que le cadre (2) est recouvert d'une couche de masquage (28), le film de lissage (8) comprenant une couche de masquage (28) et en ce que la couche de masquage (28) recouvre également au moins une partie de la face supérieure (9A) du dispositif de visualisation (1,9,13,16,25,26).

2. Interface selon la revendication précédente, dans laquelle la distance entre la face supérieure (9A) du dispositif de visualisation (1,9,13,16,25,26) et la face supérieure (4) du cadre (2) n'excède pas l'épaisseur du film de lissage (8).

3. Interface selon l'une des revendications précédentes, dans laquelle la distance entre la face supérieure (9A) du dispositif de visualisation (1,9,13,16,25,26) et la face supérieure (4) du cadre (2) est supérieure à la tolérance de positionnement desdites faces (9A,4) l'une par rapport à l'autre.

4. Interface selon l'une des revendications précédentes, dans laquelle le bord du dispositif de visualisation (1,9,13,16,25,26), éventuellement recouvert d'une couche d'ajustement (9), est sensiblement en contact du bord (7) du cadre (2).

5. Interface selon l'une quelconque des revendications précédentes, dans laquelle le dispositif de visualisation est un écran ou un afficheur (13).

6. Interface selon l'une quelconque des revendications 1 à 4, dans laquelle le dispositif de visualisation est un dispositif d'interaction tactile.

7. Interface selon la revendication 6, dans laquelle le dispositif d'interaction tactile (1,9,13,16,25,26) comprend un capteur tactile (1) au moins partiellement transparent disposé au-dessus d'un afficheur (13).

8. Interface selon l'une des revendications 6 ou 7, dans laquelle le dispositif d'interaction tactile (1,9,13,16,25,26) présentant au moins une partie en regard de la face inférieure (5) du cadre (2), ladite partie est fixée à ladite face inférieure dudit cadre.

9. Interface selon l'une quelconque des revendications 6 à 8, dans laquelle, le dispositif d'interaction (1,9,13,16,25,26) étant intégré dans un boîtier (3), le boîtier comporte dans sa partie supérieure un épaulement (25) pour le support du cadre (2).

## Patentansprüche

1. Mensch-Maschine-Schnittstelle, welche mit einer Visualisierungsvorrichtung (1, 9, 13, 16, 25, 26) ausgestattet ist, die gegenüber einem Rahmen (2) angeordnet ist, **dadurch gekennzeichnet, dass** die Oberseite (9A) der Visualisierungsvorrichtung im Wesentlichen oberhalb der Oberseite (4) des Rahmens angeordnet ist, und dadurch, dass die Vorrichtung und der Rahmen mit einer Glättfolie (8) bedeckt sind, wobei die Visualisierungsvorrichtung (1, 9, 13, 16, 25, 26) mit einer Anpassungsschicht (9) für die Position der Oberseite (9A) der Vorrichtung in Bezug auf die Oberseite (4) des Rahmens (2) bedeckt ist, dadurch, dass der Rahmen (2) mit einer Maskierungsschicht (28) bedeckt ist, wobei die Glättfolie (8) eine Maskierungsschicht (28) umfasst, und dadurch, dass die Maskierungsschicht (28) auch wenigstens einen Teil der Oberseite (9A) der Visualisierungsvorrichtung (1, 9, 13, 16, 25, 26) bedeckt.

2. Schnittstelle nach einem der vorhergehenden Ansprüche, wobei der Abstand zwischen der Oberseite (9A) der Visualisierungsvorrichtung (1, 9, 13, 16, 25, 26) und der Oberseite (4) des Rahmens (2) die Dicke der Glättfolie (8) nicht überschreitet.

3. Schnittstelle nach einem der vorhergehenden Ansprüche, wobei der Abstand zwischen der Oberseite (9A) der Visualisierungsvorrichtung (1, 9, 13, 16, 25, 26) und der Oberseite (4) des Rahmens (2) größer als die Positionierungstoleranz dieser Oberseiten (9A, 4) relativ zueinander ist.

4. Schnittstelle nach einem der vorhergehenden Ansprüche, wobei der Rand der Visualisierungsvorrichtung (1, 9, 13, 16, 25, 26), die eventuell mit einer Anpassungsschicht (9) bedeckt ist, sich im Wesentlichen in Kontakt mit dem Rand (7) des Rahmens (2) befindet.

5. Schnittstelle nach einem der vorhergehenden Ansprüche, wobei die Visualisierungsvorrichtung ein Bildschirm oder ein Anzeigegerät (13) ist.

6. Schnittstelle nach einem der Ansprüche 1 bis 4, wobei die Visualisierungsvorrichtung eine Vorrichtung zur taktilen Interaktion ist.

7. Schnittstelle nach Anspruch 6, wobei die Vorrichtung zur taktilen Interaktion (1, 9, 13, 16, 25, 26) einen wenigstens teilweise durchsichtigen Berührungssensor (1) umfasst, der oberhalb eines Anzeigegerätes (13) angeordnet ist.

8. Schnittstelle nach einem der Ansprüche 6 oder 7, wobei die Vorrichtung zur taktilen Interaktion (1, 9, 13, 16, 25, 26) wenigstens einen Teil aufweist, welcher der Unterseite (5) des Rahmens (2) gegenüberliegt, wobei dieser Teil an der Unterseite des Rahmens befestigt ist.

9. Schnittstelle nach einem der Ansprüche 6 bis 8, wobei, wenn die Interaktionsvorrichtung (1, 9, 13, 16, 25, 26) in ein Gehäuse (3) integriert ist, das Gehäuse in seinem oberen Teil einen Absatz (25) zur Abstützung des Rahmens (2) aufweist.

## Claims

1. Human-machine interface provided with a viewing device (1, 9, 13, 16, 25, 26) disposed facing a frame (2), **characterized in that** the top face (9A) of the viewing device is disposed substantially on top of the top face (4) of the frame and **in that** said device and said frame are covered with a smoothing film (8), wherein the viewing device (1, 9, 13, 16, 25, 26) is covered with an adjustment layer (9) for adjusting the position of the top face (9A) of said device with respect to the top face (4) of the frame (2), **in that** the frame (2) is covered with a masking layer (28), the smoothing film (8) comprising a masking layer (28), and **in that** the masking layer (28) also covers at least a part of the top face (9A) of the viewing device (1, 9, 13, 16, 25, 26).

2. Interface according to the preceding claim, wherein the distance between the top face (9A) of the viewing device (1, 9, 13, 16, 25, 26) and the top face (4) of the frame (2) does not exceed the thickness of the smoothing film (8).

3. Interface according to one of the preceding claims, wherein the distance between the top face (9A) of the viewing device (1, 9, 13, 16, 25, 26) and the top face (4) of the frame (2) is greater than the positioning tolerance of said faces (9A, 4) with respect to one another.

4. Interface according to one of the preceding claims, wherein the edge of the viewing device (1, 9, 13, 16, 25, 26), possibly covered with an adjustment layer (9), is substantially in contact with the edge (7) of the frame (2) .

5. Interface according to any one of the preceding claims, wherein the viewing device is a screen or a display (13).

6. Interface according to any one of Claims 1 to 4, wherein the viewing device is a touch interaction device.

7. Interface according to Claim 6, wherein the touch interaction device (1, 9, 13, 16, 25, 26) comprises an at least partially transparent touch sensor (1) disposed on top of a display (13).

8. Interface according to one of Claims 6 and 7, wherein, the touch interaction device (1, 9, 13, 16, 25, 26) having at least a part facing the bottom face (5) of the frame (2), said part is fixed to said bottom face of said frame.

9. Interface according to any one of Claims 6 to 8, wherein, the interaction device (1, 9, 13, 16, 25, 26) being incorporated in a housing (3), the housing comprises, in its top part, a shoulder (25) for supporting the frame (2).
